# EUROPÄISCHE PATENTSCHRIFT

(11) **EP 2 272 649 B1**
(45) Veröffentlichungstag und Bekanntmachung des Hinweises auf die Patenterteilung: **28.12.2011**
(21) Anmeldenummer: 09164661.2
(22) Anmeldetag: 06.07.2009
(51) Int. Cl.: B29C 45/17, B29C 31/00

(54) **Handhabungseinrichtung für schwere mehrteilige Maschinenelemente**
Handling device for heavy, multi-part machine elements
Dispositif de manipulation pour éléments de machine lourds en plusieurs parties

(43) Veröffentlichungstag der Anmeldung: 12.01.2011
(73) Patentinhaber: Lüers, Gregor, 49424 Lutten (DE)
(72) Erfinder: Lüers, Gregor, 49424 Lutten (DE)
(74) Vertreter: Meyer, Ludgerus

(56) Entgegenhaltungen:
- WO-A1-2006/103346
- DE-U1-202007 007 157
- DE-U1-202008 004 310
- FR-A- 1 498 659
- US-A- 5 007 814

## Beschreibung

### Technisches Gebiet

Die Erfindung betrifft eine Handhabungseinrichtung für schwere mehrteilige Maschinenelemente, insbesondere mehrteilige Spritzgusswerkzeuge, nach dem Oberbegriff des Anspruchs 1.

### Stand der Technik

Die Herstellung von Kunststoffelementen, die nicht in Strangform hergestellt werden, erfolgt häufig mit Spritzgießmaschinen, deren zentrales Element ein Spritzgusswerkzeug ist, das in der Regel aus zwei Formhälften besteht, wobei auch noch Zwischenplatten möglich sind. Derartige Spritzgusswerkzeuge müssen sehr formstabil sein und hohen Drücken standhalten können. Sie sind daher aus Metall gefertigt und entsprechend schwer und voluminös. Dies gilt insbesondere für die Herstellung größerer Werkstücke, wie Rohrverbinder, wie sie in der Sanitärtechnik verwendet werden, oder größere Kraftfahrzeugteile. Entsprechend gestaltet sich die Handhabung solcher Maschinenelemente sehr aufwendig.

Bei einem Spritzgusswerkzeug, das aus zwei Formhälften besteht, wird eine Seite in der Regel als Einspritzseite verwendet, und die andere Formhälfte enthält einen Auswerfer mit mehreren Auswerferstiften und eine Rückzugsfeder. An dieser Auswerferseite können auch Kernzüge vorhanden sein, die hydraulisch betätigt werden oder es können Kulissenführungen oder andere Arten von Schiebern, deren Einsatz von der Art des herzustellenden Produktes abhängt, verwendet werden.

Obgleich übliche Spritzgusswerkzeuge sehr langlebig sind, müssen diese von Zeit zu Zeit zur Reinigung oder zur Behebung von Beschädigungen zerlegt werden. Hierzu wird häufig ein Hallenkran verwendet, der das Werkzeug mit den zwei Formhälften zunächst aus der Spritzgussmaschine entnimmt. Der Hallenkran kann das Werkzeug dann auf die Auswerferseite drehen und ablegen. Wenn die Werkzeughälften nicht mehr miteinander fixiert sind, kann die Einspritzseite mit Hilfe des Krans erneut angehoben und von der Auswerferseite getrennt werden. Da die Formhälften mit Führungsbolzen in einer Formhälfte versehen sind, die in Führungen der anderen Formhälfte geführt sind, kommt es beim Anheben der Einspritzseite immer wieder zu Verkantungen oder Beschädigungen des Werkzeugs, so dass das Trennen der Formhälften mit großer Sorgfalt erfolgen muss.

Um auch an der angehobenen Einspritzseite ein leichteres Arbeiten zu ermöglichen, wird diese dann mit Hilfe des Krans um eine horizontale Achse gedreht, so dass auch die Einspritzseite entsprechend der Auswerferseite des Spritzgusswerkzeugs auf dem Arbeitstisch abgelegt werden kann. In dieser Lage können die Formhälften dann von Hand bearbeitet werden, gereinigt werden oder es können notwendige Reparaturen oder Änderungen an den Formwerkzeugen vorgenommen werden.

Nach Beendigung der Arbeiten werden die Formhälften wieder in umgekehrter Reihenfolge zusammengesetzt, wobei ebenfalls eine hohe Aufmerksamkeit erforderlich ist. Entsprechend ist das Zerlegen und Zusammensetzen des Spritzgusswerkzeugs arbeitsaufwendig und zeitaufwendig. Sofern während der Bearbeitungszeit kein zweites Spritzgusswerkzeug zur Verfügung steht, das in die Spritzgießmaschine eingesetzt werden kann, bleibt der Produktionslauf der Spritzgießmaschine für die Zeit der Bearbeitung des Spritzgusswerkzeugs unterbrochen. Es besteht daher das Bestreben, den Zeit- und Arbeitsaufwand zur Bearbeitung der Spritzgusswerkzeuge so klein wie möglich zu halten.

Es sind auch Ansätze bekannt geworden, den Reinigungszyklus von Spritzgusswerkzeugen dadurch zu vergrößern, dass das Spritzgusswerkzeug zwischen zwei Takten regelmäßig gereinigt wird. Aus der DE 42 22 274 C2 ist entsprechend eine modular aufgebaute Vorrichtung zum Entgraten, Entformen und Reinigen bei der getakteten automatischen Fertigung von Spritzgussteilen bekannt, wobei die Formwerkzeuge zwischen den Takten durch radiale und axiale bewegbare Bürsten gereinigt werden. Die Bürsten sind zusammen mit weiteren Modulen an einem Träger befestigt, der zwischen den Takten eine Reinigung der Formhälften des Spritzgusswerkzeugs ermöglicht. Auch bei diesem System lassen sich Reparaturen oder Änderungen an den Formhälften nicht vermeiden, so dass auch ein solches Spritzgusswerkzeug von Zeit zu Zeit aus der Spritzgießmaschine entnommen werden muss.

In der DE 10 2006 046 528 A1 ist ein Kunststoff-Spritzgusswerkzeug mit zwei Formhälften angegeben, bei dem die Werkzeughälften als Adapterteile ausgebildet sind, um es zu ermöglichen, bei einem erforderlichen Formwechsel lediglich Konturelemente austauschen zu müssen. Dazu können Formkern bzw. Matrizen jeweils von einer Klemmplatte gelöst und über Kranhaken aus den Formhälften entnommen werden. Die Adapterplatten, die Klemmplatten und die verwendete Heißleitereinheit können bei einem Formwechsel in dem Spritzgusswerkzeug verbleiben.

Zwar ermöglicht diese Art eines Spritzgusswerkzeugs den Aufwand bei einem Formwechsel zu reduzieren, jedoch bleibt nach wie vor das Problem, dass das Spritzgusswerkzeug von Zeit zu Zeit aus der Spritzgießmaschine zur Reinigung oder Reparatur vollständig entnommen werden muss.

Aus der DE 20 2008 004 310 U1 ist eine Handhabungsvorrichtung bekannt, bei der Maschinenteile mittels Schraubzwingen an Drehtellem befestigt werden, die auf Verschiebeschlitten eines Arbeitstisches angeordnet sind. Es ist nur eine Drehung eines Maschinenteils um eine vertikale Achse möglich.

Die DE 20 2007 007 157 U1 beschreibt einen Montage- und Bearbeitungstisch für Spritzgussformen, bei dem eine ortsfeste Palette und eine auf dem Arbeitstisch in parallelen Längsführungen verschieblich angeordnete Palette vorgesehen sind, wobei der Arbeitstisch als Düsenplatte ausgebildet ist, welche in Bezug auf die bewegliche Palette als Luftführungslager wirkt. Die Paletten sind in x-y-Richtung verschiebbar und um eine vertikale Achse drehbar.

### Darstellung der Erfindung

Der Erfindung liegt daher die Aufgabe zugrunde, eine Handhabungseinrichtung für schwere Maschinenteile, insbesondere Spritzgusswerkzeuge oder ähnliche mehrteilige Maschinenelemente anzugeben, welche eine leichte Bearbeitung der Maschinenteile in unterschiedlicher Orientierung ermöglicht.

Diese Aufgabe wird durch die im Anspruch 1 angegebene Erfindung gelöst. Vorteilhafte Weiterbildungen der Erfindung sind in Unteransprüchen angegeben.

Die Erfindung geht aus von einer Handhabungseinrichtung für schwere mehrteilige Maschinenelemente, insbesondere mehrteilige Spritzgusswerkzeuge, welche einen Arbeitstisch umfasst, auf dem das Maschinenelement befestigbar ist, wobei das Maschinenelement in seiner räumlichen Orientierung auf dem Arbeitstisch variiert werden kann.

Die Oberseite des Arbeitstisches enthält wenigstens eine Führungsschiene, auf der wenigstens eine erste bewegbare Halterung gegenüber einer zweiten bewegbaren oder ortsfest angeordneten Halterung verschiebbar ist. Die Halterungen enthalten jeweils eine Halteplatte zur Befestigung von Teilen des mehrteiligen Maschinenelements. Ferner enthalten die Halteplatten eine Schwenkeinrichtung zur Verschwenkung der an den Halteplatten befestigten Teile des Maschinenelements.

Erfindungsgemäß ist wenigstens eine der Halteplatten auch um eine horizontale Achse schwenkbar.

Vorzugsweise sind beide Halterungen verschieblich als Verschiebeschlitten ausgebildet.

Mit der erfindungsgemäßen Handhabungseinrichtung können daher schwere Maschinenelemente, wie ein Spritzgusswerkzeug, das aus zwei Formhälften besteht, auf einfache Weise behandelt werden. Die Formhälften werden dazu jeweils an einer Halterung oder einem Verschiebeschlitten befestigt und können so in einer horizontalen Ebene gegeneinander verschoben werden. Da die Formhälften nicht unmittelbar an den Halterungen befestigt werden, sondern an Halteplatten, die mit Schwenkeinrichtungen versehen sind, können die Formhälften nach dem Trennen voneinander in andere räumliche Orientierungen geschwenkt werden, so dass der Zugang zur Bearbeitung und Reinigung der Formhälften erheblich erleichtert wird.

Die Befestigung der Teile des Maschinenelements an den Halteplatten kann entweder über Halteklammern, Schraubbefestigungen oder in Spritzgießmaschinen häufig anzutreffende Schnellspannvorrichtungen erfolgen oder vorzugsweise über magnetisierbare Spannplatten, die die Teile des Maschinenelements an der Halteplatte befestigen.

Die Halteplatte kann weiter über Schwenkeinrichtungen in horizontaler Richtung verfügen, so dass das Maschinenteil zur bequemen Handhabung in eine gewünschte räumliche Orientierung gebracht werden kann.

Vorzugsweise weist wenigstens eine der Halteplatten auch einen Drehteller auf, so dass das Maschinenteil nicht nur verschwenkbar ist, sondern auch um eine senkrechte Achse zum Arbeitstisch verdrehbar ist. Ferner kann die magnetisierbare Spannplatte gegen die Halteplatte drehbar ausgebildet sein.

Zur noch weiteren Verbesserung der Agronomie des Arbeitsplatzes kann der Arbeitstisch höhenverstellbar ausgebildet sein, z. B. über eine Scherenanordnung.

Die Betätigung der Verschiebung oder Verschwenkung der Halteplatten erfolgt entweder hydraulisch, elektrisch oder pneumatisch. Ferner ist es möglich, den Halteplatten hydraulisch, elektrisch oder pneumatisch betätigbare Mechaniken zur Betätigung von Werkelementen der Maschinenelemente, insbesondere eines Spritzgusswerkzeugs, zuzuordnen, um eine Betätigung der im Maschinenelement enthaltenen Werkelement auch bei der Bearbeitung des Maschinenelements zu ermöglichen, insbesondere um die Funktion der Werkelemente zu überprüfen.

Mit Hilfe der Erfindung können insbesondere schwere Spritzgusswerkzeuge mit zwei Formhälften auf einfache Weise voneinander getrennt werden, in nahezu beliebiger Stellung bearbeitet werden und anschließend einfach und sicher wieder zusammengesetzt werden. Die Bearbeitung kann in einer angenehmen Arbeitsstellung erfolgen.

### Kurze Beschreibung der Abbildungen der Zeichnungen

Die Erfindung wird nachstehend anhand eines Ausführungsbeispiels näher erläutert. Es zeigen:

Fig. 1 eine Handhabungseinrichtung in Grundstellung,

Fig. 2 einen Zustand der Handhabungseinrichtung, in dem ein Spritzgusswerkzeug der Einrichtung zugeführt wird,

Fig. 3 einen Zustand, in dem das Spritzgusswerkzeug in der Einrichtung befestigt ist,

Fig. 4 einen Zustand, in dem die Verschiebeschlitten auseinander gefahren sind, wobei die Schlitten jeweils eine der Formhälften enthalten,

Fig. 5 einen Zustand, in dem einer der Formhälften verschwenkt ist,

Fig. 6 einen Zustand, in dem beide Formhälften verschwenkt sind, und

Fig. 7 einen Zustand, in dem beide Formhälften des Werkzeugs nur von einem Verschiebeschlitten aufgenommen sind.

### Darstellung eines Ausführungsbeispiels der Erfindung

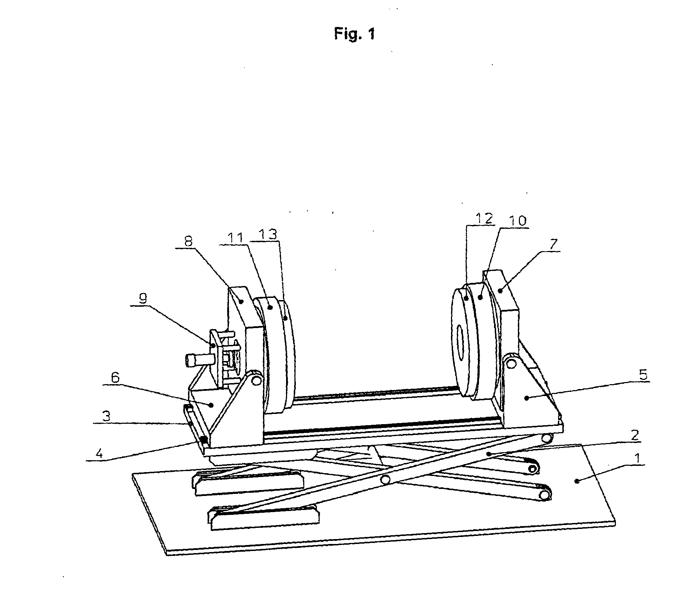

Die in Fig. 1 dargestellte Handhabungseinrichtung enthält eine Fußbodenplatte 1, auf der ein Scherenhubtisch 2 befestigt ist. Der Scherenhubtisch enthält auf der Oberseite eine Grundplatte 3, auf der zwei parallele Führungsschienen 4 in Längsrichtung verlaufen. Entlang der Führungsschienen 4 können ein rechter Verschiebeschlitten 5 und ein linker Verschiebeschlitten 6 in einer horizontalen Ebene verschoben werden.

Anstelle einer doppelten Führungsschiene können auch andere Arten von Führungen verwendet werden, wie eine prismatische Einschienenführung oder eine Stangenrollführung, solange mit diesen Führungen ein präzises Zu- und Voneinanderweg-Bewegen der Verschiebeschlitten möglich ist.

Ebenfalls kann der Scherenhubtisch durch andere Einrichtungen zum Aufwärts- und Abwärtsbewegen der Grundplatte ersetzt werden, wie z. B. eine teleskopische Hubvorrichtung.

Die beiden Verschiebeschlitten 5 und 6 enthalten jeweils Halteplatten 7 bzw. 8, die auf seitliche Lagern an den Verschiebeschlitten befestigt sind. Mittels der Lager können die Halteplatten 7 und 8 um eine horizontale Achse gekippt werden. An den einander gegenüberstehenden Seiten der Verschiebeschlitten 5 und 6 sind auf den Halteplatten 7 und 8 Drehteller 10 bzw. 11 befestigt, die an ihrer Vorderseite Magnetspannplatten 12 bzw. 13 enthalten. Bei den Drehelementen handelt es sich insbesondere um zentral oder ringförmig gelagerte Drehteller, die es ermöglichen, die daran befestigten Magnetspannplatten 12 und 13 um ihre Achse drehen zu lassen.

Ein weiterer nicht gezeigter horizontal gelagerter Drehteller kann jeweils den Verschiebeschlitten hinzugefügt sein, so dass die rechten und linken Halteplatten 7 und 8 auch in einer horizontalen Ebene verschwenkt werden können.

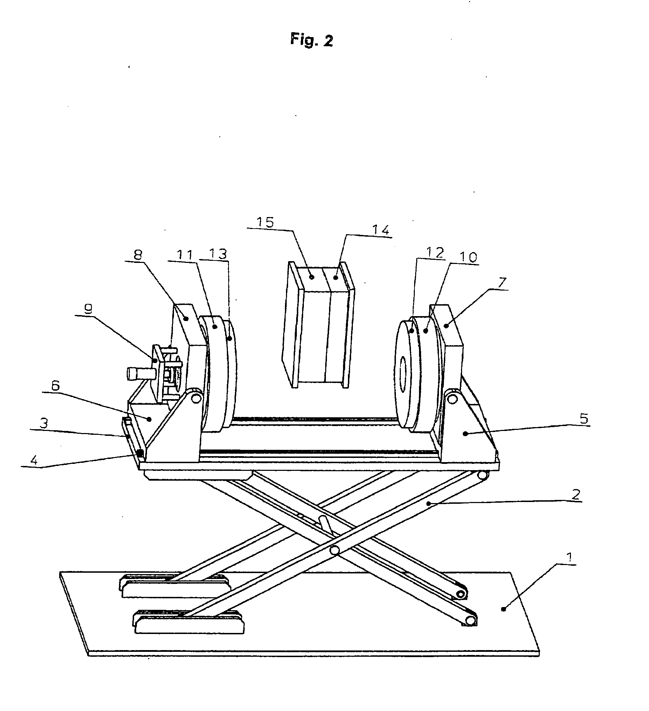

Zur Bearbeitung eines Spritzgusswerkzeugs mit einer rechten Werkzeughälfte 14 und einer linken Werkzeughälfte 15 wird zunächst der Scherenhubtisch 2 in eine geeignete Arbeitshöhe gebracht, wie es in Fig. 2 dargestellt ist. Dann folgt die Zufuhr des Spritzgusswerkzeugs, z. B. mit Hilfe eines Krans, zwischen die auseinander geschobenen Verschiebeschlitten 5 und 6.

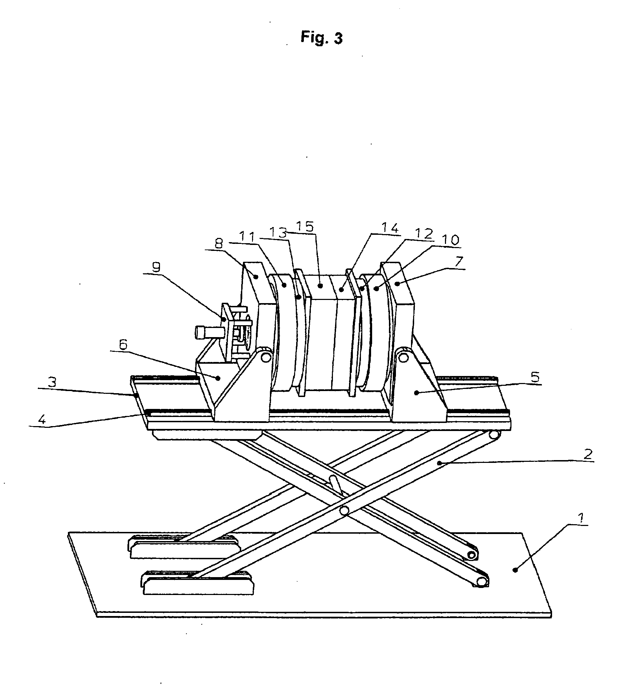

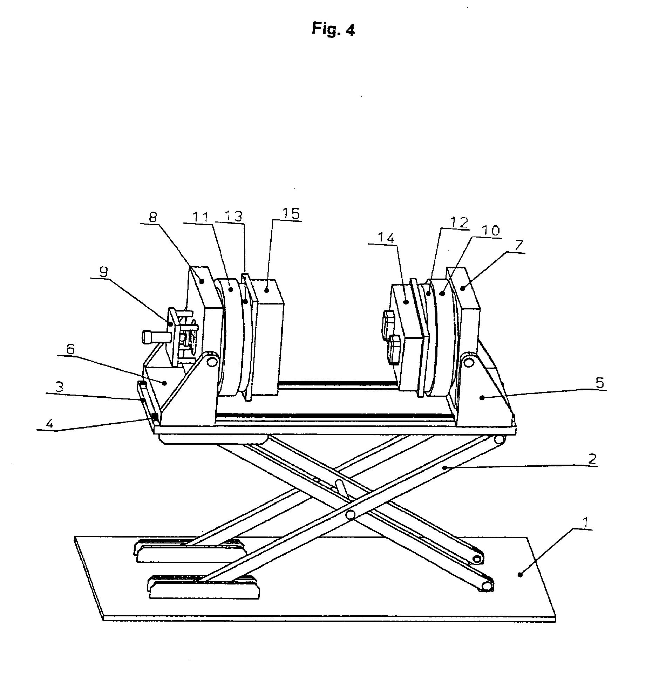

Nachdem das Spritzgusswerkzeug auf dem Arbeitstisch abgestellt bzw. in einer gewissen Höhe zwischen den Halteplatten gehalten wird, werden gemäß Fig. 3 die Verschiebeschlitten 5 und 6 gegen das Werkzeug geschoben. Dann werden durch Stromzufuhr die rechte Magnetspannplatte 12 und die linke Magnetspannplatte 13 aktiviert, so dass das Spritzgusswerkzeug an seinen flachen metallischen Seiten an den Magnetspannplatten und damit an den Halteplatten befestigbar ist. Durch Auseinanderschieben der Schiebeschlitten 5 und 6 werden nun die Werkzeughälften 14 und 15 voneinander getrennt. Fig. 4 zeigt einen Zustand, in dem die Werkzeughälften 14 und 15 des Spritzgusswerkzeugs voneinander getrennt sind und die Werkzeughälfte 14 bereits mittels des rechten Drehtellers 10 um 90° in einer vertikalen Ebene gedreht wurde. Voraussetzung dafür, dass eine Drehung möglich ist, ist dass das Spritzgusswerkzeug nicht vollständig auf dem Arbeitstisch abgestellt wurde, sondern vor der Magnetisierung der Schwenkplatten in einer solchen Höhe zwischen den Schiebeplatten 5 und 6 angeordnet wurde, dass eine Drehung der Werkzeughälften möglich bleibt, ohne dass der Arbeitstisch oder die Führungsschienen berührt werden.

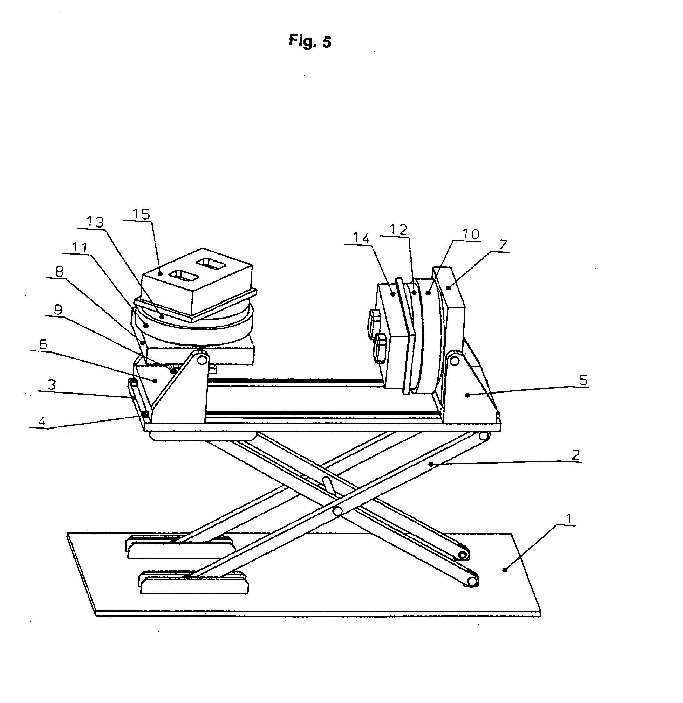

Fig. 5 zeigt einen Zustand, in dem die linke Halteplatte 8 um ihr horizontales Schwenklager um 90° nach oben geschwenkt wurde, so dass die Werkzeughälfte 15 mit ihrer Oberfläche nun etwa in einer horizontalen Ebene liegt. Auch in dieser Stellung kann der Drehteller 11 gedreht werden, so dass das Werkzeug 15 um eine vertikale Achse drehbar ist und damit ein bequemer Zugang zum Werkzeug möglich ist, ohne dass der Maschinenarbeiter ständig seine Arbeitsposition ändern muss.

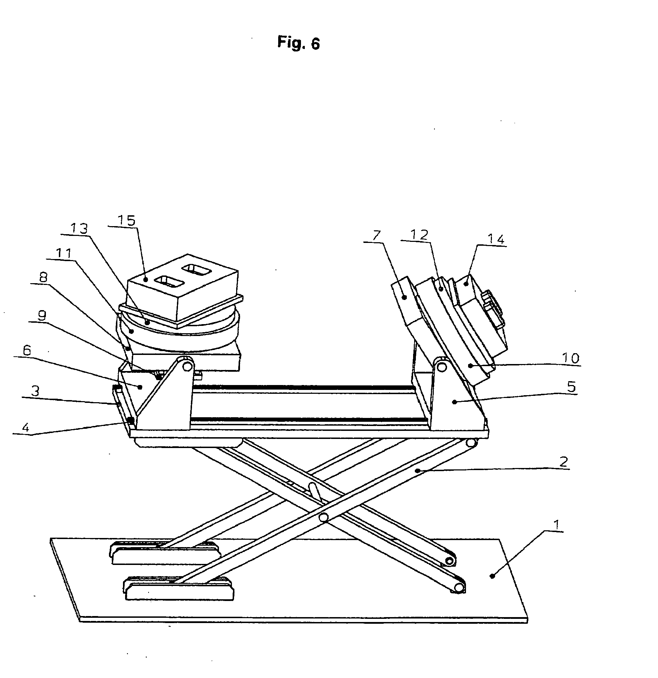

Fig. 6 zeigt, dass auch die rechte Schwenkplatte 7 sich soweit schwenken lässt, bis die günstigste Arbeitsposition erreicht worden ist. Der Scherenhubtisch kann dabei in der Höhe variiert werden.

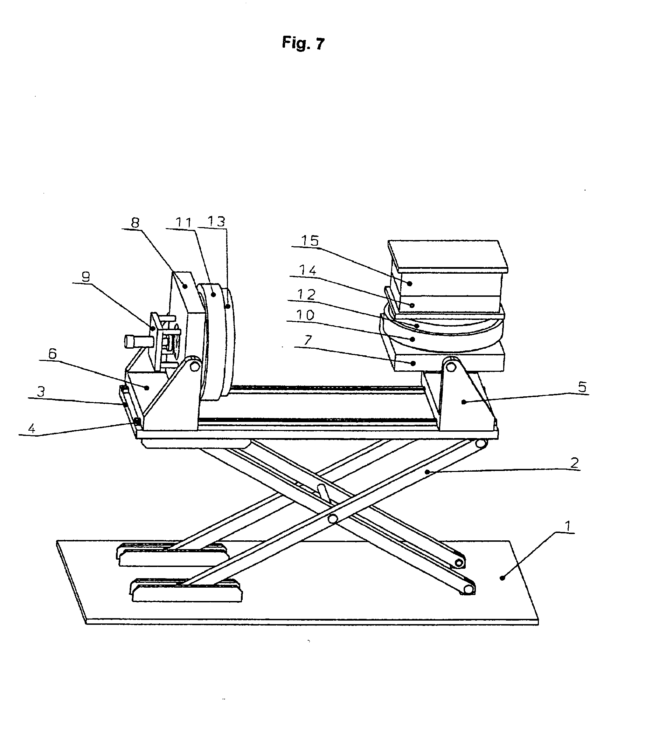

Fig. 7 zeigt einen Zustand, bei dem beide Werkzeughälften 14 und 15 lediglich an der rechten Halteplatte 7 befestigt sind, ohne dass die Werkzeughälften 14 und 15 voneinander getrennt wurden. In diesem Zustand kann auch eine Seite der Werkzeughälfte 15 bearbeitet werden, die bei einer Befestigung der Werkzeughälfte an dem Verschiebeschlitten 6 nicht zugänglich wäre. Des Weiteren kann das Spritzgusswerkzeug mit den beiden Werkzeughälften 14 und 15 nun in liegender Anordnung komplett von dem Verschiebeschlitten 5 abgehoben werden, z. B. um es mittels Kran auf einem Lagerplatz zu befördern. Umgekehrt kann ein Werkzeug, das auf einer Palette liegt, in waagerechter Anordnung auf das Handhabungsgerät zur weiteren Bearbeitung gelegt werden.

Wenigstens eine der Verschiebeschlitten kann auch Betätigungselemente, wie eine Auswerferbetätigung 9, enthalten, um bei der Bearbeitung die Wirkelemente der entsprechenden Werkzeughälfte betätigen zu können.

Die erfindungsgemäße Handhabungseinrichtung ist nicht nur für Spritzgusswerkzeuge verwendbar, sondern für jegliche andere schwere Maschinenteile, die eine häufige Wartung erfordern, wobei die zu bearbeitenden Flächen leicht zugänglich sein sollen.

### Bezugszeichenliste

1 Fußbodenplatte
2 Scherenhubtisch
3 Grundplatte
4 Führungsschienen
5 rechter Verschiebeschlitten
6 linker Verschiebeschlitten
7 rechte Halteplatte
8 linke Halteplatte
9 Auswerferbetätigung
10 rechter Drehteller
11 linker Drehteller
12 rechte Magnetspannplatte
13 linke Magnetspannplatte
14 rechte Werkzeughälfte
15 linke Werkzeughälfte

## Patentansprüche

1. Handhabungseinrichtung für schwere mehrteilige Maschinenelemente, insbesondere mehrteilige Spritzgusswerkzeuge, welche einen Arbeitstisch (2) umfasst, auf dem das Maschinenelement befestigbar ist und das Maschinenelement in seiner räumlichen Orientierung auf dem Arbeitstisch (2) variierbar ist, wobei die Oberseite des Arbeitstisches (2) wenigstens eine Führungsschiene (4) enthält, auf der wenigstens eine erste bewegbare Halterung gegenüber einer zweiten bewegbaren oder ortsfest angeordneten Halterung verschiebbar befestigt ist, und die Halterungen (5, 6) jeweils eine Halteplatte (7, 8) zur Befestigung von Teilen (14, 15) des mehrteiligen Maschinenelements enthalten, wobei die Halteplatten (7, 8) eine Schwenkeinrichtung zur Verschwenkung der an der Halteplatte befestigten Teile (14, 15) des Maschinenelements aufweisen, **dadurch gekennzeichnet, dass** wenigstens eine der Halteplatten um eine horizontale Achse schwenkbar ist.

2. Handhabungseinrichtung nach Anspruch 1, **dadurch gekennzeichnet, dass** die ersten und zweiten Halterungen als Verschiebeschlitten ausgebildet sind.

3. Handhabungseinrichtung nach Anspruch 1 oder 2, **dadurch gekennzeichnet, dass** die Halteplatten (7, 8) Befestigungsklammem oder Schraubbefestigungen zur Befestigung jeweils eines Teils des Maschinenelements aufweisen.

4. Handhabungseinrichtung nach Anspruch 1 oder 2, **dadurch gekennzeichnet, dass** wenigstens eine der Halteplatten (7, 8) eine magnetisierbare Spannplatte (12, 13) enthält, um aus magnetisierbarem Metall bestehende Teile (14, 15) eines Maschinenelements temporär an der Halteplatte (7, 8) zu befestigen,

5. Handhabungseinrichtung nach Anspruch 1, 2, 3 oder 4, **dadurch gekennzeichnet, dass** wenigstens eine der Halteplatten um eine vertikale Achse schwenkbar ist.

6. Handhabungseinrichtung nach Anspruch 5, **dadurch gekennzeichnet, dass** wenigstens eine der Halteplatten einen Drehteller (10, 11) aufweist.

7. Handhabungseinrichtung nach Anspruch 4, **dadurch gekennzeichnet, dass** die Spannplatte (12, 13) gegenüber der Halteplatte (7, 8) drehbar ausgebildet ist.

8. Handhabungseinrichtung nach Anspruch 1 oder 2, **dadurch gekennzeichnet, dass** der Arbeitstisch höhenverstellbar ausgebildet ist.

9. Handhabungseinrichtung nach Anspruch 8, **dadurch gekennzeichnet, dass** wenigstens eine der Halteplatten (7, 8) hydraulisch, elektrisch oder pneumatisch betätigbare Mechaniken (9) zur Betätigung von Wirkelementen des Spritzgusswerkzeugs zugeordnet sind.

10. Handhabungseinrichtung nach einem oder mehreren der vorhergehenden Ansprüche, **dadurch gekennzeichnet, dass** die Verschiebeschlitten (5, 6), Halteplatten (7, 8) und/oder Spannelemente (12; 13) mittels elektrischem, hydraulischem oder pneumatischem Antrieb betätigbar sind.

## Claims

1. Handling apparatus for heavy, multipart machine elements, in particular multipart injection moulding tools, which comprises a working table (2) on which the machine element can be fastened and said machine element can be varied in its spatial orientation on said working table (2), wherein the upper side of the working table (2) contains at least one guide rail (4) on which at least one first movable holding arrangement is fastened so as to be displaceable in relation to a second holding arrangement which is movable or arranged in a stationary manner, and the holding arrangements (5, 6) each contain a holding plate (7, 8) for fastening parts (14, 15) of the multipart machine element, wherein said holding plates (7, 8) have a swivelling apparatus for tilting the parts (14, 15) of the machine element which are fastened to the holding plate,
**characterised in that**
at least one of the holding plates is swivellable about a horizontal axis.

2. Handling apparatus according to claim 1,
**characterised in that**
the first and second holding arrangements are constructed as displacing carriages.

3. Handling apparatus according to claim 1 or 2,
**characterised in that**
the holding plates (7, 8) have fastening cramps or screw fastenings for fastening a part of the machine element in each case.

4. Handling apparatus according to claim 1 or 2,
**characterised in that**
at least one of the holding plates (7, 8) contains a magnetisable clamping plate (12, 13) in order to fasten parts (14, 15) of a machine element which consist of magnetisable metal to the holding plate (7, 8) in a temporary manner.

5. Handling apparatus according to claim 1, 2, 3 or 4,
**characterised in that**
at least one of the holding plates is swivellable about a vertical axis.

6. Handling apparatus according to claim 5,
**characterised in that**
at least one of the holding plates has a rotary table (10, 11).

7. Handling apparatus according to claim 4,
**characterised in that**
the clamping plate (12, 13) is constructed so as to be rotatable in relation to the holding plate (7, 8).

8. Handling apparatus according to claim 1 or 2,
**characterised in that**
the working table is constructed so as to adjustable in height.

9. Handling apparatus according to claim 8,
**characterised in that**
hydraulically, electrically or pneumatically actuatable mechanisms (9) for actuating active elements of the injection moulding tool are associated with at least one of the holding plates (7, 8).

10. Handling apparatus according to one or more of the preceding claims,
**characterised in that**
the displacing carriages (5, 6), holding plates (7, 8) and/or clamping elements (12, 13) can be actuated by means of an electric, hydraulic or pneumatic drive.

## Revendications

1. Dispositif de manipulation pour éléments de machine lourds en plusieurs parties, en particulier pour moules à injection en plusieurs parties, qui comprend une table de travail (2) sur laquelle l'élément de machine est apte à être fixé et peut changer d'orientation dans l'espace sur ladite table de travail (2), étant précisé que la face supérieure de la table de travail (2) contient au moins un rail de guidage (4) sur lequel au moins une première attache mobile est fixée coulissante par rapport à une seconde attache mobile ou fixe, et que les attaches (5, 6) contiennent chacune une plaque de fixation (7, 8) pour fixer des parties (14, 15) de l'élément de machine en plusieurs parties, et étant précisé que les plaques de fixation (7, 8) comportent un dispositif pivotant pour faire pivoter les parties (14, 15) de l'élément de machine fixées à la plaque de fixation, **caractérisé en ce que** l'une au moins des plaques de fixation est apte à pivoter sur un axe horizontal.

2. Dispositif de manipulation selon la revendication 1, **caractérisé en ce que** les première et seconde attaches sont conçues comme des coulisseaux.

3. Dispositif de manipulation selon la revendication 1 ou 2, **caractérisé en ce que** les plaques de fixation (7, 8) comportent des pinces de fixation ou des fixations à vis pour fixer une partie de l'élément de machine.

4. Dispositif de manipulation selon la revendication 1 ou 2, **caractérisé en ce que** l'une au moins des plaques de fixation (7, 8) contient une plaque de serrage apte à être aimantée (12, 13) pour fixer provisoirement des parties (14, 15) d'un élément de machine composées d'un métal apte à être aimanté.

5. Dispositif de manipulation selon la revendication 1, 2, 3 ou 4, **caractérisé en ce que** l'une au moins des plaques de fixation est apte à pivoter sur un axe vertical.

6. Dispositif de manipulation selon la revendication 5, **caractérisé en ce que** l'une au moins des plaques de fixation comporte un plateau tournant (10, 11).

7. Dispositif de manipulation selon la revendication 4, **caractérisé en ce que** la plaque de serrage (12, 13) est conçue pour pouvoir tourner par rapport à la plaque de fixation (7, 8).

8. Dispositif de manipulation selon la revendication 1 ou 2, **caractérisé en ce que** la table de travail est conçue pour être réglable en hauteur.

9. Dispositif de manipulation selon la revendication 8, **caractérisé en ce qu'**il est prévu, associés à l'une au moins des plaques de fixation (7, 8), des mécanismes (9) à commande hydraulique, électrique ou pneumatique pour actionner des éléments actifs du moule à injection.

10. Dispositif de manipulation selon l'une au moins des revendications précédentes, **caractérisé en ce que** les coulisseaux (5, 6), les plaques de fixation (7, 8) et/ou les éléments de serrage (12, 13) sont aptes à être actionnés à l'aide d'un entraînement électrique, hydraulique ou pneumatique.
